Europäisches Patentamt

European Patent Office

Office européen des brevets

(19)

(11) Veröffentlichungsnummer: **0 374 195 B1**

## (12) EUROPÄISCHE PATENTSCHRIFT

(45) Veröffentlichungstag der Patentschrift: **02.03.94**

(21) Anmeldenummer: **89901114.2**

(22) Anmeldetag: **22.12.88**

(86) Internationale Anmeldenummer:
**PCT/EP88/01190**

(87) Internationale Veröffentlichungsnummer:
**WO 89/05783 (29.06.89 89/14)**

Verbunden mit 88121489.4/0324968
(europäische
Anmeldenummer/Veröffentlichungsnummer)
durch Entscheidung vom 13.06.90.

(51) Int. Cl.5: **C04B 28/26**, C04B 38/02,
//(C04B28/26,14:30,18:06,18:14,
22:06,22:08,22:14,24:16)

(54) **WASSERHALTIGE, HÄRTBARE SCHAUMMASSEN AUS ANORGANISCHEN BESTANDTEILEN UND VERFAHREN ZU IHRER HERSTELLUNG.**

(30) Priorität: **24.12.87 DE 3744210**

(43) Veröffentlichungstag der Anmeldung:
**27.06.90 Patentblatt 90/26**

(45) Bekanntmachung des Hinweises auf die
Patenterteilung:
**02.03.94 Patentblatt 94/09**

(84) Benannte Vertragsstaaten:
**AT BE CH DE ES FR GB IT LI LU NL SE**

(56) Entgegenhaltungen:
EP-A- 0 111 862      EP-A- 0 148 280
EP-A- 0 199 941      DE-A- 2 227 640
DE-A- 3 512 588      DE-B- 2 525 611
US-A- 3 095 312      US-A- 3 864 137

(73) Patentinhaber: **HÜLS TROISDORF AG**

D-53839 Troisdorf(DE)

(72) Erfinder: **MEYER, Frank**
**Bogenstrasse 10**
**D-4300 Essen 15(DE)**
Erfinder: **MEHESCH, Hans**
**Frillendorfer Höhe 38**
**D-4300 Essen 1(DE)**
Erfinder: **CORNELY, Wolfgang**
**Lohstrasse 30**
**D-4390 Gladbeck(DE)**
Erfinder: **FISCHER, Martin**
**Siepenstrasse 4**
**D-4200 Oberhausen(DE)**
Erfinder: **RIECKS, Birgit**
**Bentheimer Strasse 4**
**D-4300 Essen 1(DE)**

Erfinder: **NEUSCHÄFFER, Karlheinz**
**Böttnerstrasse 6**
**D-5653 Leichlingen(DE)**

**Beschreibung**

Die Erfindung betrifft fließfähige, wasserhaltige Schaummassen auf Basis von alkalihaltigen, anorganischen Bestandteilen, welche unter Zusatz eines Sauerstoff abspaltenden Schäummittels Schaummassen bilden, sowie das Verfahren zur Herstellung solcher Massen.

Aus der EP-A2-0 148 280 sind wasserhaltige, härtbare Formmassen bekannt, welche aus Alkalisilikatlösungen, denen gegebenenfalls Alkalihydroxid zugesetzt ist, und einem wasserfreien, feinteiligen Oxidgemisch herzustellen sind, das als Hauptbestandteile $SiO_2$ in Mengen von 7 bis 75 Gew.-% und $Al_2O_3$ in Mengen von 12 bis 87 Gew.-% enthält. Dieses Oxidgemisch entsteht als Staub bei industriellen Schmelzprozessen. Füllstoffe sind diesen Formmassen zusetzbar. Solche Formmassen härten bei Temperaturen von 50 bis 150 °C zu Formkörpern mit erheblicher Festigkeit.

Die Härtung der Formmassen zu Formkörpern erheblicher Festigkeit schon bei niedriger Temperatur und hohen Wassergehalten ohne die Erfordernis eines Brennprozesses, jedoch mit der Möglichkeit, die Formkörper hohen Temperaturen auszusetzen, erfordert offenbar feste Reaktionskomponenten ganz bestimmter Art.

Nach der EP-A2-0 199 941 können als feste Reaktionskomponenten auch kalzinierter Bauxit oder eine glasartige, amorphe Elektrofilterasche aus Hochtemperatur-Steinkohlekraftwerken eingesetzt werden. Die reaktionsfähigen Feststoffe liegen in feiner Verteilung vor. Der kalzinierte Bauxit und die Füllstoffe werden gemahlen.

Diesen Formmassen können Schäummittel zugesetzt werden, besonders Peroxide als anorganische oder organische Peroxide, Percarbonate und besonders als $H_2O_2$.

Die Schäumreaktion unter Verwendung von Sauerstoff abspaltenden Schäummitteln erfolgt in Abhängigkeit von der Art und Menge des Peroxids in exothermer Reaktion mit dem enthaltenem Alkalihydroxid. Einige Peroxide benötigen eine Erwärmung von außen bis zur Anspringtemperatur, was ungleichmäßige Aushärtung bei grossen Formkörpern zur Folge haben kann. Die Schäumung und insbesondere die Härtung erfolgen vergleichsweise langsam. Die gattungsgemäßen Schaummassen ergeben nicht immer feinporige Schaumkörper mit gleichmäßigen Poren. Eine nachträgliche Erwärmung von außen ist z.B. in nichtstationären Anlagen bzw. bei Anwendung als Ortsschaum beim Füllen von Profilen, Kanälen oder ähnlichen Hohlräumen nicht möglich.

Aus der DE-A1-22 27 640 (Bayer) ist ein Verfahren zur Verschäumung von wäßrigen Silikatlösungen bekannt. Die Verschäumung erfolgt dabei durch Reaktion von Wasserstoffperoxid mit einem Reduktionsmittel unter Freisetzung eines Gases.

Der Erfindung liegt die Aufgabe zugrunde, eine wasserhaltige, härtbare Schaummasse und ein Verfahren zu ihrer Herstellung zur Verfügung zu stellen, bei dem eine Wärmezufuhr von außen nicht nötig ist und eine schnelle Härtung erfolgt, wobei gleichzeitig niedrige Dichte und hohe Festigkeit durch Feinporigkeit erreicht werden soll.

Die Aufgabe wird durch eine wasserhaltige, härtbare Schaummasse gemäß Patentanspruch 1 und durch das Verfahren zu ihrer Herstellung nach dem Verfahrensanspruch 12 sowie den Unteransprüchen gelöst.

Erfindungsgemäß werden als Sauerstoff abgebende Schäummittel bevorzugt ein Peroxid und sehr bevorzugt $H_2O_2$ eingesetzt, insbesondere als 5 bis 25 gew.-%ige wäßrige Lösung. Die Menge des Schäummittels, berechnet als $H_2O_2$ soll 0,2 bis 5,0 Gew.-%, vorzugsweise 0,3 bis 3,0 Gew.-%, bezogen auf die Schaummasse, betragen.

Die reagierenden Bestandteile der Schaummasse sind nach Art und Menge dieselben feinteiligen reaktionsfähigen Feststoffe und derselbe Härter in Form von Alkalisilikatlösung mit gegebenenfalls Gehalten von Alkalihydroxid, wie sie aus dem genannten Stand der Technik bekannt sind. Bevorzugt ist der reaktionsfähige Feststoff ein feinteiliges Oxidgemisch mit analytischen Gehalten von 7 bis 75 Gew.-% amorphen, nicht glasartigem $SiO_2$ und 12 bis 87 Gew.-% $Al_2O_3$ mit geringen kristallinen Anteilen, welches bei Hochtemperaturprozessen, z.B. beim Schmelzen von Korund, als Filterstaub abgeschieden wird.

Einsetzbar ist auch Elektrofilterasche von Steinkohlekraftwerken mit Brennkammertemperaturen über 1600 ºC, welche analytische Gehalte von 45 bis 60 Gew.-% $SiO_2$ in glasiger Form und 25 bis 35 Gew.-% amorphes $Al_2O_3$ neben beispielsweise $Fe_2O_3$ aufweist, oder kalzinierter gemahlener Bauxit. Amorphe, wasserhaltige oder ggf. entwässerte, pulverförmige Kieselsäure ist ebenfalls ein bevorzugter reaktionsfähiger Feststoff.

Es wurde gefunden, daß der Zusatz von vorzugsweise Reduktionsmitteln, sehr bevorzugt von reduzierend wirkenden Schwefelverbindungen, oder von Oxidationsmitteln in feiner Verteilung oder von feinteiligen Stoffen mit großer innerer Oberfläche eine exotherme Reaktion mit den Peroxiden hervorruft und somit als Reaktionsbeschleuniger und Schäumungshilfsmittel wirkt. Die Temperaturerhöhung in dem Reaktionsge-

3

misch führt zu einer Beschleunigung des Schäumens und der Härtung sowie zu einem sehr gleichmäßigen und feinzelligen Schaum von verminderter Dichte. Besonders die bevorzugten Reduktionsmittel und in besonderem Maße die reduzierend wirkenden Schwefelverbindungen erlauben es durch Variation des Reduktionsmittels und seiner Konzentration, die Aushärtezeit beliebig zu variieren und exakt vorher zu bestimmen.

Die Menge der zugesetzten Reaktionsbeschleuniger soll 0,1 bis 9, vorzugsweise 0,5 bis 5 Gew.-%, bezogen auf die Schaummasse, betragen.

Geeignete Reduktionsmittel sind reduzierend wirkende Schwefelverbindungen beispielsweise Alkalisulfit, Alkalipyrosulfit, Alkalidithionit, das Alkalisalz der Hydroxymethansulfinsäure (Rongalit), gegebenenfalls auch Alkalithiosulfat bzw. beispielsweise auch Alkaliphosphit oder Alkaliborhydrid als nicht Schwefel enthaltende Reduktionsmittel. Von den Alkaliverbindungen sind die Natriumverbindungen bevorzugt.

Geeignete Oxidationsmittel sind beispielsweise Chromate wie Alkalichromat oder -bichromat, Cu(II)-Salze oder Fe(III)-Salze wie die Chloride oder Sulfate. Die Oxidationsmittel rufen ebenfalls eine Temperaturerhöhung hervor.

Geeignete Stoffe mit großer innerer Oberfläche, beispielsweise von 200 bis 1.600 $m^2$/g nach BET sind u.a. Ruß, Eisenpigmente wie Eisenocker, Eisenoxidrot oder feinverteilte Eisenoxide. Diese Stoffe beschleunigen erheblich die Zersetzung des Peroxids. Stoffe mit hoher BET-Oberfläche, z.B. größer als 1000 $m^2$/g, sind, bereits in sehr kleiner Menge wirksam und können ggf. in sehr kleiner Menge mit größeren Mengen eines Reduktionsmittels konbiniert werden und vermindern das Schaumgewicht und erhöhen die Feinheit des Schaumes.

Durch die erfindungsgemaße Zugabe der Reaktionsbeschleuniger ist es gelungen, verbesserte Schaummassen herzustellen. Die Aushärtzeit ist besonders durch die Reduktionsmittel ohne Wärmezufuhr von außen besser steuerbar. Die so hergestellten Schäume haben eine feinere Schaumstruktur, so daß die mechanische Festigkeit gegenüber den aus dem Stand der Technik bekannten Schäumen verbessert wird.

Die festen Stoffe können getrennt voneinander oder bevorzugt als Feststoffmischung aus einem oder mehreren der reaktionsfähigen Feststoffe und einem oder mehreren inerten Füllstoffen bestehen.

Die Menge der reaktionsfähigen Feststoffe zu Füllstoffen beträgt bevorzugt 60 bis 100 zu 40 bis 0 Gew.-%.

Geeignete Füllstoffe sind vorzugsweise leichte Füllstoffe, beispielsweise Flugasche, Blähton, Vermiculit, Perlit, Glimmer, Quarzmehl, Basaltmehl, Talkum, Schiefermehl, Foamglas o. ä. und deren Mischungen.

Vorzugsweise beträgt die Menge des reaktionsfähigen Feststoffs 2,2 bis 7,0, sehr bevorzugt 2,5 bis 6,0 Gew.-Teile je Teil gelöstes $SiO_2$, soweit mittlere Wassergehalte, Alkaligehalte und Füllstoffgehalte eingestellt werden und die genannte Eigenschaftskombination von fest und leicht angestrebt wird sowie eine Pumpbarkeit erreicht werden soll.

Die beschleunigende Wirkung des Reduktionsmittels kommt erst im Moment der Schäummittelzugabe zur Wirkung, d. h. bis zu diesem Zeitpunkt ist die Reaktionsmasse je nach Zusammensetzung und Temperatur zwischen z. B. 10 und 120 Minuten ohne Aushärten stabil und transportierbar. Dadurch ist es möglich, daß die Masse ohne das Schäummittel zum Ort der Schäumung befördert und dort das Schäummittel zugegeben wird. Dies ist besonders bei einem Einsatz im Untertage-Bergbau und im Tunnelbau von Vorteil. Es können Hohlräume aller Art, z. B. zur Erhaltung oder Wiederherstellung des Gebirgsverbundes sowie zu Abdichtungszwecken gefüllt werden, wobei die schäumende Masse auch z. B. in Spalten vordringt. Die Schäumung kann ohne Form, mit einer nur zeitweilig oder teilweise angebrachten, ggf. einfachen Form oder mit einer maßgenauen Form erfolgen, da der Schaum z. B. auch Hinterschneidungen füllt und maßgenau ohne Schwindung abbildet. Zum anderen können in ortsfesten Anlagen Serien von Schaumkörpern durch Füllen der Formen nacheinander von derselben Mischanlage für die Schaummasse aus durch Einfüllen über Leitungen oder dergleichen nacheinander hergestellt werden. Nach Erhärten hat der Schaum eine hohe Druckfestigkeit. Das Verfahren zur Herstellung der Schaummassen wird erfindungsgemäß so ausgeführt, daß nahe am Ort der Schäumung das Schäummittel bevorzugt als letzter Bestandteil zugegeben wird.

Der Reaktionsbeschleuniger wird bevorzugt dem Feststoff, der ggf. Füllstoff enthält, oder dem Härter durch Vermischen zugegeben.

**BEISPIELE**

Zur Herstellung der Schaummassen wurden folgende Komponenten verwendet:
1. Alkalisilikatlösung

|  | SiO$_2$ | Na$_2$O | K$_2$O (in Gew.-%) |
|---|---|---|---|
| Härter 1 | 23 | 6,8 | 16,5 |
| Härter 2 | 26 | 18,0 | - |
| Härter 3 | 25 | - | 27,0 |
| Härter 4 | 24 | 8,6 | 12,4 |

2. Feststoffmischung

| 1 | 64 Gew.-% | O1$^x$; | 36 Gew.-% Füllstoffe |
|---|---|---|---|
| 2 | 66 Gew.-% | O2$^{xx}$; | 34 Gew.-% Füllstoffe |
| 3 | 60 Gew.-% | E1$^{xxx}$; | 40 Gew.-% Füllstoffe |
| 4 | 69 Gew.-% | E2$^{xxxx}$; | 31 Gew.-% Füllstoffe |

x = reaktionsfähiger Feststoff Oxid-Gemisch mit 22 Gew.-% SiO$_2$, 77 Gew.-% Al$_2$O$_3$,

xx = reaktionsfähiger Feststoff Oxid-Gemisch mit 27 Gew.-% SiO$_2$, 82 Gew.-% Al$_2$O$_3$,

xxx = reaktionsfähiger Feststoff Oxid-Gemisch mit 40 Gew.-% SiO$_2$, 50 Gew.-% Al$_2$O$_3$,

xxxx = reaktionsfähiger Feststoff feinverteiltes amorphes SiO$_2$.

In den reaktionsfähigen Feststoffen sind 1 bis 10 % Nebenbestandteile als Oxide, z. B. Fe$_2$O$_3$, enthalten.

3. Reduktionsmittel

| Natriumdithionit | Na$_2$S$_2$O$_4$ |
|---|---|
| Natriumsulfid | Na$_2$S |
| Natriumpyrosulfit | Na$_2$S$_2$O$_5$ |
| Rongalit | NaSO$_2$CH$_2$OH |

4. Wasserstoffperoxidlösung, 10 gew.-%ig in Wasser.

**BEISPIEL 1**

104 g Härter 1 und 128 g Feststoff 1 mit einem Gehalt an Reduktionsmittel, wie in der Tabelle 1 angegeben, werden in einem 0,5 l-Gefäß zu einer fließfähigen Masse gerührt. Anschließend werden 20 g Wasserstoffperoxidlösung eingerührt. Im Zentrum der sich entwickelnden Schaummasse wird der Temperaturverlauf gemessen. Feststoff 2 in der genannten Menge ergibt entsprechende Ergebnisse bei Verarbeitung der genannten Mengen Härter 1 und Härter 4.

**BEISPIEL 2**

104 g Härter 1 und 128 g Feststoff 1 mit einem Gehalt an Reduktionsmittel, wie in der Tabelle 2 angegeben, werden in einem 0,5 l-Gefäß zu einer fließfähigen Masse gerührt. Anschließend werden 20 g Wasserstoffperoxidlösung eingerührt. Die Tabelle 2 gibt Reaktionszeiten und Materialkennwerte wieder.

Startzeit bezeichnet die Zeit vom Beginn des Mischvorgangs bis zum Beginn des Schäumens, Steigzeit bezeichnet die Zeit vom Beginn bis zum Ende des Schäumens, Gelierzeit bezeichnet die Zeit vom Beginn des Mischvorgangs bis zum Erstarren des Schaumes.

Das Raumgewicht gibt die Rohdichte des trockenen Schaums an. Die einaxiale Druckfestigkeit wird analog DIN 52105 an 60 mm-Würfeln gemessen.

Entsprechende Ergebnisse werden bei Kombination der genannten Mengen von Härter 2 und Feststoff 1 und Härter 3 mit den Feststoffen 3 und 4 erhalten. Entsprechende Ergebnisse werden auch erhalten bei Zugabe von 22 g einer 12 gew.-%igen Lösung H$_2$O$_2$.

5

**BEISPIEL 3**

104 g Härter 1 werden mit 128 g Feststoff 1, dem 1,2 % Natriumdithionit beigefügt sind, gemischt. Das Gemisch ist nach 70 min nicht mehr pumpfähig und geliert nach 105 min.

**BEISPIEL 4**

104 g Härter 1 werden mit 128 g Feststoff 1, dem 1,2 % Natriumdithionit beigefügt sind, gemischt. Nach 50 min werden 20 g Wasserstoffperoxidlösung zugegeben. Die Masse schäumt nach 15 s innerhalb von 70 s auf. Die Masse geliert nach 8'30''. Die mittlere Rohdichte der trockenen Schaummasse beträgt 280 kg/m$^3$. Die einaxiale Druckfestigkeit beträgt 0,54 n/mm$^2$.

**BEISPIEL 5**

In einer Baustoff-Mischanlage werden 250 kg Feststoff, der 2,0 Gew.-% Rongalit enthält, in mehreren Chargen mit 203 kg Härter 1 gemischt. Aus einer ständig durchgerührten Vorlage wird die Suspension mit Hilfe einer Kolbenpumpe in einem 200 m langen Hochdruckschlauch von 25 mm Innendurchmesser mit einem Durchsatz von 25 kg/min gefördert. Simultan wird eine 10 gew.- %ige wäßrige Wasserstoffperoxidlösung aus einer Vorlage mit einem Durchsatz von 3 kg/min mit Hilfe einer Kolbenpumpe in einem 200 m langen Hochdruckschlauch von 10 mm Innendurchmesser gefördert und am Ende über eine achtstrahlige Ringdüse in den Suspensionsstrom eingebracht. Hinter der Ringdüse durchläuft das Gemisch einen Statikmischer und wird in einen zu verfüllenden Raum ausgetragen. Das Gemisch schäumt innerhalb von 40 s nach Austritt zu seinem 5-fachen Volumen auf. Innerhalb von 16 min läßt sich so ein Hohlraum von 1 m$^3$ verfüllen. Nach 20 min ist der Schaum begehbar. Die nach einer Stunde ermittelte einaxiale Druckfestigkeit analog DIN 52105 beträgt 0,8 N/mm$^2$.

## T A B E L L E  1

| Anteil Reduk-mittel | $Na_2S_2O_4$ | | Rongalit | | $Na_2S_2O_5$ | | $Na_2S$ | |
|---|---|---|---|---|---|---|---|---|
| Gew.-% | GZ. min | Tm. ºC | GZ. min | Tm. ºC | GZ. min | Tm. ºC | GZ. min | Tm. ºC |
| 0 | 140' | 38 | 140' | 38 | 140 | 38 | 140' | 38 |
| 0,4 | 45' | 46 | 45' | 49 | 70 | 44 | 30 | 48 |
| 1,2 | 8'30" | 59 | 7' | 72 | 30' | 55 | 12' | 60 |
| 1,6 | 6' | 69 | 5' | 78 | 25' | 58 | 6' | 68 |
| 2,0 | 4' | 79 | 4' | 79 | 20' | 63 | 4' | 74 |
| 3,1 | 2' | 84 | 3'30" | 80 | 10' | 70 | 3' | 86 |
| 5,0 | 1' | 81 | 4'30" | 77 | 3'30" | 76 | 2' | 82 |

GZ.: Gelierzeit
Tm.: Temperatur max.

EP 0 374 195 B1

**T A B E L L E   2**

| Reduktions-mittel Gew.-% | Startzeit (s) | Steigzeit (s) | Gelierzeit (min) | Raumgewicht $(kg/m^3)$ | einaxiale Druckfestigkeit $(N/mm^2)$ |
|---|---|---|---|---|---|
| 0 | 15 | 200 | 140 | 260 | 0,19 |
| 1,2 % Natrium-dithionit | 10 | 70 | 8,5 | 280 | 0,54 |
| 2,0 % Natrium-dithionit | 9 | 40 | 4 | 330 | 0,72 |
| 1,2 % Rongalit | 10 | 60 | 6 | 300 | 0,58 |
| 2,0 % Rongalit | 9 | 40 | 4 | 345 | 1,03 |

**BEISPIELE 6 BIS 9**

Entsprechend Beispiel 4 werden zu 120 g Härter 1 und 120 g Feststoff 2 bzw. 110 g Feststoff 4 folgende Reaktionsbeschleuniger gegeben:

EP 0 374 195 B1

0,8 Gew.-% Ruß (BET 1200 m$^2$/g) - Beispiel 6

bzw.

1,4 Gew.-% Eisenoxidrot - Beispiel 7

bzw.

1,8 Gew.-% Kaliumbichromat als Oxidationsmittel - Beispiel 8

bzw.

2,4 Gew.-% Eisen-III-Sulfat als Oxidationsmittel - Beispiel 9

Die Masse schäumt nach 15 bis 45 s innerhalb von 50 bis 120 s nach Zugabe der $H_2O_2$-Lösung auf. Die Härtung erfolgt in 10 bis 60 Minuten.

**Patentansprüche**

1.  Wasserhaltige, härtbare Schaummasse auf der Basis anorganischer Bestandteile in fließfähiger Verteilung, enthaltend

    a) gelöstes $SiO_2$ aus einer als Härter wirkenden, wäßrigen Lösung von Alkalisilikaten,

    b) je Gew.-Teil gelöstes $SiO_2$

        I) 0,7 bis 2,5 Gew.-Teile $K_2O$ bzw.

        II) 0,55 bis 1,5 Gew.-Teile $Na_2O$ oder

        III) entsprechende Anteile $K_2O$ und $Na_2O$,

    wobei das $K_2O$ bzw. $Na_2O$ aus

        I) Alkalihydroxid,

        II) dessen wäßriger Lösung und/oder

        III) einer wäßrigen Lösung von Alkalisilikaten stammt,

    c) je Gew.-Teil gelöstes $SiO_2$ 1,3 bis 10 Gew.-Teile einer, oder mehrerer festen Reaktionskomponenten aus der Gruppe

        I) ein Oxidgemisch mit Gehalten von amorphem $SiO_2$ und Aluminiumoxid,

        II) glasartig amorphe Elektrofilterasche,

        III) kalzinierter Bauxit,

        IV) ungelöstes $SiO_2$ aus einer amorphen, dispers-pulverförmigen, entwässerten oder wasserhaltigen Kieselsäure,

    d) Füllstoffe,

    e) Wasser sowie

    f) ein Sauerstoff abspaltendes Schäummittel,

    **dadurch gekennzeichnet**, daß die Schaummasse zusätzlich ein oder mehrere Reaktionsbeschleuniger aus der Gruppe

        I) Reduktionsmittel,

        II) Oxidationsmittel,

        III) feinteiliger Stoff mit großer innerer Oberfläche enthält.

2.  Schaummasse nach Anspruch 1, <u>dadurch gekennzeichnet</u>, daß als Reduktionsmittel eine reduzierend wirkende Schwefelverbindung enthalten ist.

3.  Schaummasse nach Anspruch 2, <u>dadurch gekennzeichnet</u>, daß Alkalisulfit enthalten ist.

4.  Schaummasse nach Anspruch 2, <u>dadurch gekennzeichnet</u>, daß Alkalipyrosulfit enthalten ist.

5.  Schaummasse nach Anspruch 2, <u>dadurch gekennzeichnet</u>, daß Alkalidithionit enthalten ist.

6.  Schaummasse nach Anspruch 2, <u>dadurch gekennzeichnet</u>, daß Alkalithiosulfat enthalten ist.

7.  Schaummasse nach Anspruch 2, <u>dadurch gekennzeichnet</u>, daß das Alkalisalz der Hydroxymethansulfinsäure enthalten ist.

8.  Schaummasse nach Anspruch 1, <u>dadurch gekennzeichnet</u>, daß als Reduktionsmittel Alkaliborhydrid oder Alkaliphosphit enthalten ist.

9.  Schaummasse nach Anspruch 1, <u>dadurch gekennzeichnet</u>, daß als Oxidationsmittel Chromat, Cu(II)-Salz oder Fe(III)-Salz enthalten ist.

9

EP 0 374 195 B1

10. Schaummasse nach Anspruch 1, dadurch gekennzeichnet, daß als feinteiliger Stoff Ruß, anorganische Farbpigmente oder Eisenoxide enthalten ist.

11. Schaummasse nach einem der Ansprüche 1 bis 10, dadurch gekennzeichnet, daß 0,1 bis 9, vorzugsweise 0,5 bis 5 Gew.-% eines Reaktionsbeschleunigers oder mehrerer, bezogen auf die Schaummasse, enthalten ist.

12. Verfahren zur Herstellung von Schaummassen nach einem der Ansprüche 1 bis 11, dadurch gekennzeichnet, daß dem Reaktionsgemisch ein Reaktionsbeschleuniger zugegeben wird.

13. Verfahren nach Anspruch 12, dadurch gekennzeichnet, daß der Reaktionsbeschleuniger durch Vermischen dem Feststoff oder dem Härter zugegeben wird.

14. Verfahren zur Herstellung von Schaummassen nach einem der Ansprüche 12 oder 13, dadurch gekennzeichnet, daß die Masse ohne das Schäummittel zum Ort der Schäumung gefördert und das Schäummittel am Ort der Schäumung oder unmittelbar vor der Verschäumung zugegeben wird.

15. Verwendung der Schaummasse nach Anspruch 1 und einem oder mehreren der Ansprüche 2 bis 11 zur Verfüllung von Hohlräumen im Berg- und Tunnelbau.

**Claims**

1. Water-containing, hardenable foam composition on the basis of inorganic components in pourable distribution, containing
   a) dissolved $SiO_2$ from an aqueous solution of alkali silicates acting as a hardener,
   b) per part by weight of dissolved $SiO_2$
       I) 0.7 to 2.5 parts by weight of $K_2O$ or
       II) 0.55 to 1.5 parts by weight $Na_2O$ or
       III) corresponding portions of $K_2O$ and $Na_2O$, where the $K_2O$ or $Na_2O$ originates from
       I) alkali hydroxide,
       II) aqueous solutions thereof, and/or
       III) an aqueous solution of alkali silicates,
   c) per parts by weight dissolved $SiO_2$ 1.3 to 10 parts by weight of one or more solid reaction components from the group
       I) an oxide mixture with contents of amorphous $SiO_2$ and aluminum oxide,
       II) vitreous amorphous electrofilter ash,
       III) calcined bauxite,
       IV) undissolved $SiO_2$ from an amorphous, disperse-powdery, dehydrated or water-containing silicic acid,
   d) fillers,
   e) water, as well as
   f) an oxygen-releasing foaming agent, characterized in that the foam composition additionally contains one or more reaction accelerators from the group
       I) reducing agents,
       II) oxidizing agents,
       III) finely divided material with a large internal surface.

2. Foam composition according to claim 1, characterized in that it contains a reducing sulphur compound as the reducing agent.

3. Foam composition according to claim 2, characterized in that it contains an alkali sulphite.

4. Foam composition according to claim 2, characterized in that it contains an alkali pyrosulphite.

5. Foam composition according to claim 2, characterized in that it contains an alkali dithionite.

6. Foam composition according to claim 2, characterized in that it contains an alkali thiosulphate.

10

EP 0 374 195 B1

**7.** Foam composition according to claim 2, characterized in that it contains the alkali salt of hydroxymethanesulphinic acid.

**8.** Foam composition according to claim 1, characterized in that it contains alkali borohydride or alkali phosphite as the reducing agent.

**9.** Foam composition according to claim 1, characterized in that it contains a chromate, a Cu(II)-salt or a Fe(III)-salt as the oxidizing agent.

**10.** Foam composition according to claim 1, characterized in that it contains carbon black, inorganic color pigments or iron oxide as the finely divided substance.

**11.** Foam composition according to one of claims 1 to 10, characterized in that it contains 0.1 to 9, preferably 0.5 to 5% by weight, based on the foam composition, of one or several reaction accelerators.

**12.** Process for the preparation of foam compositions according to one of claims 1 to 11, characterized in that a reaction accelerator is added to the reaction mixture.

**13.** Process according to claim 12, characterized in that the reaction accelerator is added by mixing with the solid substance or the hardener.

**14.** Process for the production of foam compositions according to one of claims 12 or 13, characterized in that the composition is transported without the foaming agent to the foaming location, and the foaming agent is added at the foaming location or just prior to the foaming.

**15.** Use of the foam composition according to claim 1 and one or more of claims 2 - 11 for filling of hollow spaces in the mining and tunnel industries.

**Revendications**

**1.** Masse à faire mousser, aqueuse et durcissable, à base de constituants minéraux qui se trouvent dans un état de division tel qu'ils peuvent s'écouler librement, et contenant :

a) de la silice dissoute provenant d'une solution aqueuse de silicate alcalin, agissant comme durcisseur,

b) pour chaque partie en poids de $SiO_2$ dissoute,

I) de 0,7 à 2,5 parties en poids de $K_2O$, ou

II) de 0,55 à 1,5 parties en poids de $Na_2O$, ou

III) des proportions correspondantes de $K_2O$ et de $Na_2O$,

les $K_2O$ et $Na_2O$ provenant de

I) les hydroxydes alcalins,

II) leurs solutions aqueuses, et/ou

III) une solution aqueuse de silicate alcalin,

c) pour chaque partie en poids de $SiO_2$ dissoute, de 1,3 à 10 parties en poids d'un ou plusieurs composants réactifs solides choisis dans le groupe suivant :

I) un mélange d'oxydes contenant de la silice amorphe et de l'oxyde d'aluminium,

II) des cendres d'électrofiltres amorphes de type vitreux,

III) de la bauxite calcinée,

IV) de la silice non dissoute, provenant d'un acide silicique amorphe, dispersé, pulvérulent, déshydraté ou hydraté,

d) des charges,

e) de l'eau, ainsi que

f) un agent moussant libérant de l'oxygène, caractérisée en ce que la masse à faire mousser contient en outre un ou plusieurs accélérateurs de réaction, choisis dans le groupe constitué par

I) un réducteur,

II) un oxydant,

III) une matière finement divisée présentant une grande surface interne.

11

**2.** Masse à faire mousser, conforme à la revendication 1, caractérisée en ce qu'elle contient, comme réducteur, un composé du soufre à action réductrice.

**3.** Masse à faire mousser, conforme à la revendication 2, caractérisée en ce qu'elle contient un sulfite alcalin.

**4.** Masse à faire mousser, conforme à la revendication 2, caractérisée en ce qu'elle contient un pyrosulfite alcalin.

**5.** Masse à faire mousser, conforme à la revendication 2, caractérisée en ce qu'elle contient un hydrosulfite alcalin.

**6.** Masse à faire mousser, conforme à la revendication 2, caractérisée en ce qu'elle contient un thiosulfate alcalin.

**7.** Masse à faire mousser, conforme à la revendication 2, caractérisée en ce qu'elle contient un hydroxy-méthane-sulfinate de métal alcalin.

**8.** Masse à faire mousser, conforme à la revendication 1, caractérisée en ce qu'elle contient, comme agent réducteur, un borohydrure ou un phosphite de métal alcalin.

**9.** Masse à faire mousser, conforme à la revendication 1, caractérisée en ce qu'elle contient, comme agent oxydant, un chromate, un sel de cuivre-II ou un sel de fer-III.

**10.** Masse à faire mousser, conforme à la revendication 1, caractérisée en ce qu'elle contient, comme matière finement divisée, du noir de fumée, un pigment minéral ou un oxyde de fer.

**11.** Masse à faire mousser, conforme à l'une des revendications 1 à 10, caractérisée en ce qu'elle contient de 0,1 à 9 % en poids et de préférence de 0,5 à 5 % en poids d'un ou de plusieurs accélérateurs de réaction, par rapport à la masse à faire mousser.

**12.** Procédé de préparation de masses à faire mousser, conformes à l'une des revendications 1 à 11, caractérisé en ce que l'on ajoute au mélange de réaction un accélérateur de réaction.

**13.** Procédé conforme à la revendication 12, caractérisé en ce que l'accélérateur de réaction est ajouté par mélange à la matière solide ou au durcisseur.

**14.** Procédé de préparation de masses à faire mousser, conforme à l'une des revendications 12 et 13, caractérisé en ce que l'on achemine la masse, sans agent moussant, jusqu'à l'endroit où se déroule le moussage, et en ce que l'on ajoute l'agent moussant là où se déroule le moussage ou bien immédiatement avant le moussage.

**15.** Utilisation des masses à faire mousser, conformes à la revendication 1 et à une ou à plusieurs des revendications 2 à 11, pour le remplissage d'espaces creux dans l'exploitation de mines et la construction de tunnels.